# EUROPEAN PATENT SPECIFICATION

(11) **EP 3 666 708 B1**
(45) Date of publication and mention of the grant of the patent: **14.08.2024**
(21) Application number: 19215039.9
(22) Date of filing: 10.12.2019
(51) Int. Cl.: B66B 3/00, B66B 1/46

(54) **ELEVATOR OPERATION PANEL, ELEVATOR SYSTEM AND ELEVATOR PANEL DISPLAY METHOD**
AUFZUGSBEDIENTAFEL, AUFZUGSSYSTEM UND AUFZUGSTAFELANZEIGEVERFAHREN
PANNEAU DE COMMANDE D'ASCENSEUR, SYSTÈME D'ASCENSEUR ET PROCÉDÉ D'AFFICHAGE DE PANNEAU D'ASCENSEUR

(30) Priority: 10.12.2018 CN 201811502801
(43) Date of publication of application: 17.06.2020
(73) Proprietor: Otis Elevator Company, Farmington, Connecticut 06032 (US)
(72) Inventor: LI, Kai, Pudong New Area, 200135 (CN)
(74) Representative: Dehns

(56) References cited:
- WO-A1-2007/108168
- WO-A2-2006/001804
- JP-A- 2004 099 222
- JP-A- 2014 141 315
- JP-B2- 5 844 423

## Description

### FIELD OF THE INVENTION

The present application relates to the field of elevators, and in particular to an elevator operation panel and a display method thereof.

### BACKGROUND OF THE INVENTION

At present, with the development and maturity of elevator technology, passengers have higher demand for the intelligence and convenience in the use of elevators. For example, as touch control screens are introduced into elevator display and call applications, more information can be displayed and a more flexible button layout becomes possible, but there is still space to optimize the display mode. For example, for a conventional elevator display panel, the change in its display size is usually limited, but the number of floors of the building in which it is installed may vary from several floors to dozens of floors, or even more than one hundred floors. In the case of a particularly large number of floors, if the elevator display panel is required to display all floors, the display identifier for each floor will be limited to a very small space, so it is extremely inconvenient for a passenger to quickly locate the desired floor. If the passenger enters the desired floor, such operation will take extra operation time and increase the complexity of panel display and the corresponding control mode. JP 5844423 B2 discloses a car display control method of an elevator which includes a step of displaying an image which does not include floor buttons corresponding to floors existing in a different direction from a moving direction of a car. WO 2006/0001804 A2 discloses a conveyor passenger interface system.

### SUMMARY OF THE INVENTION

In view of the above, the present application provides an elevator operation panel, an elevator system, and an elevator panel display method, thereby effectively solving or at least alleviating one or more of the above problems and problems in other aspects existing in the prior art.

In order to achieve the object of the present application, according to a first aspect of the present application, an elevator operation panel is provided as defined by claim 1.

The display area is further configured to display second floor information that is not on the elevator movement trend, wherein the second floor information has a different display effect from the first floor information.

Optionally, the first floor information and/or the second floor information is displayed by one or more of a number, a text, a progress bar, a percentage, or a color.

Optionally, the first floor information is displayed by a number or a text having a first brightness, and the second floor information is displayed by a number or a text having a second brightness.

Optionally, the first brightness is greater than the second brightness.

Optionally, the first floor information is displayed by a number or a text having a first color, and the second floor information is displayed by a number or a text having a second color.

The second floor information is displayed by an ellipsis, wherein when the touch control area receives a corresponding input instruction, the control unit controls the ellipsis to unfold to display the second floor information.

Optionally, the elevator operation panel comprises a liquid crystal display, and the display area and the touch control area are integrated in the liquid crystal display.

In order to achieve the object of the present application, according to a second aspect of the present application, an elevator system is further provided as defined by claim 8.

The display area is configured to display second floor information that is not on the elevator movement trend, wherein the second floor information has a different display effect from the first floor information.

Optionally, the first floor information and/or the second floor information is displayed by one or more of a number, a text, a progress bar, a percentage, or a color.

Optionally, the first floor information is displayed by a number or a text having a first brightness, and the second floor information is displayed by a number or a text having a second brightness.

Optionally, the first brightness is greater than the second brightness.

Optionally, the first floor information is displayed by a number or a text having a first color, and the second floor information is displayed by a number or a text having a second color.

The second floor information is displayed by an ellipsis, wherein when the touch control area receives a corresponding input instruction, the control unit controls the ellipsis to unfold to display the second floor information.

Optionally, the elevator operation panel comprises a liquid crystal display, and the display area and the touch control area are integrated in the liquid crystal display.

Optionally, the control unit is provided in the elevator operation panel.

In order to achieve the object of the present application, according to a third aspect of the present application, an elevator panel display method is further provided as defined by claim 11.

The display area is configured to display second floor information that is not on the elevator movement trend, wherein the second floor information has a different display effect from the first floor information.

The second floor information is displayed by an ellipsis, wherein when the touch control area receives a corresponding input instruction, the control unit controls the ellipsis to unfold to display the second floor information.

According to the elevator operation panel, the elevator system and the elevator panel display method of the present application, by displaying the corresponding floor information based on the elevator movement trend, on the one hand, the amount of information displayed on the panel can be reduced, and part of the information screening and filtering time of the passenger can be saved, and on the other hand, information most likely to be required by the passenger can be displayed with the maximum probability on the panel in the first place, so as to prevent the passenger from performing other operations to obtain the required information, thereby effectively improving passenger experience.

### BRIEF DESCRIPTION OF THE DRAWINGS

The technical solutions of the present application are further described in detail below with reference to the accompanying drawings and embodiments. However, it should be understood that the drawings are designed only for the purpose of explanation, and therefore are not served to limit the scope of the present application. In addition, unless being pointed out in particular, the drawings are only intended to conceptually illustrate the structural constructions described herein, and are not necessarily drawn to scale.
FIG. 1 is a schematic diagram of the display area of an elevator operation panel when an embodiment of the elevator system of the present application is on the 1^{st} floor.
FIG. 2 is a schematic diagram of the display area of an elevator operation panel when an embodiment of the elevator system of the present application is on the 4^{th} floor.

### DETAILED DESCRIPTION OF THE EMBODIMENT(S) OF THE INVENTION

The present application will be described in more detail hereinafter with reference to the accompanying drawings in which exemplary embodiments of the present application are illustrated. However, the present invention may be implemented in many different forms and should not be construed as being limited to the embodiments set forth herein. On the contrary, these embodiments are provided so that the disclosure of the present application becomes thorough and complete, and the concept of the present application is completely conveyed to those skilled in the art.

Although the features of the present application are disclosed in connection with several embodiments or one of the embodiments, if, however, such features may be desirable and/or advantageous for any given or identifiable function, such features may be combined with one or more other features of other implementations/embodiments.

Several functional entities may be mentioned herein, which do not necessarily have to correspond to physically or logically independent entities. These functional entities may be implemented by means of software, or implemented in one or more hardware modules or integrated circuits, or implemented in different processing devices and/or microcontroller devices.

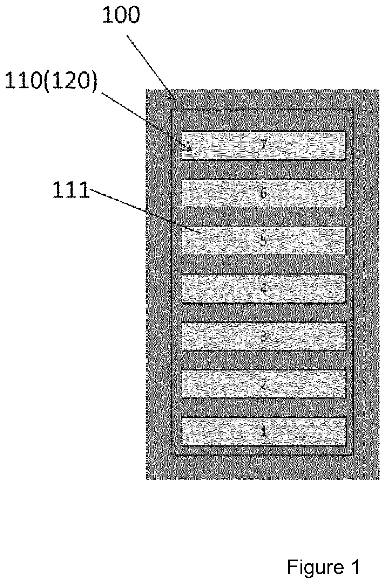

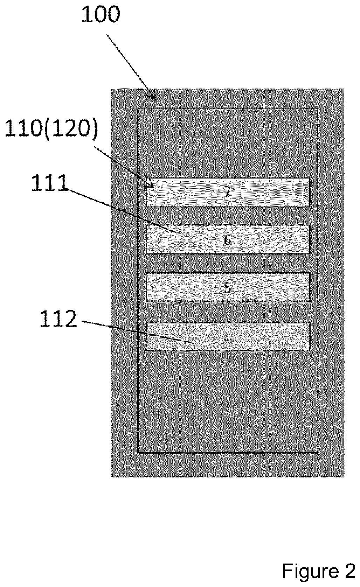

In conjunction with FIGS. 1 and 2, an embodiment of an elevator operation panel 100 is illustrated. The elevator operation panel 100 at least includes a display area 110, a touch control area 120, and a control unit (not shown). Specifically, the display area 110 is configured to display first floor information 111 of the building based at least on an elevator movement trend, wherein the first floor information 111 includes all floors that the elevator has not yet arrived at on the elevator movement trend. The touch control area 120 is configured to receive an input instruction. The control unit is configured to receive the input instruction from the touch control area 120, and adjust display information of the display area 110 according to the input instruction. Further, the control unit is configured to receive floor change information of the building, and adjust the display information of the display area 110 according to the floor change information of the building. Under such a configuration, according to the elevator operation panel 100 of the present application, by displaying the corresponding floor information based on the elevator movement trend, on the one hand, the amount of information displayed on the panel can be reduced, and part of the information screening and filtering time of the passenger can be saved, so that the passenger can quickly select the desired floor, and on the other hand, information most likely to be required by the passenger can be displayed with the maximum probability on the panel in the first place, so as to prevent the passenger from performing other operations to obtain the required information, thereby effectively improving passenger experience.

Wherein, the control unit mentioned in the foregoing embodiments may be directly disposed in or attached to the elevator operation panel 100, and it may also belong to the overall control unit of the corresponding elevator system. Accordingly, that the elevator operation panel 100 includes a control unit as described herein is intended to express the integrity in function, but not to emphasize that the operation panel 100 must include the corresponding hardware for the control unit.

In addition, it should be understood that, in this context, "elevator movement trend" refers to the movement direction of an elevator car in the elevator system after receiving one or more call instructions, which represents a time-continuous process. In this process, it is possible that the car moves up alone, moves down alone, or first moves up and then down, and so on. Therefore, the corresponding elevator floors on the elevator movement trend refer to part or all of the floors that the elevator car will sequentially pass or arrive at.

On the basis of the above, further improvements may be made to the components or functional parts therein or additional components and functional parts may be added based on the foregoing embodiments, as will be exemplarily explained below.

For example, the display area 110 may also be configured to display second floor information 112 that is not on the elevator movement trend, wherein the second floor information 112 has a different display effect from the first floor information 111. At this time, by providing different display effects, it is still possible to highlight the first floor information 111 most likely to be required by the passenger. At the same time, when the passenger has a call error or temporarily changes the request, an option to quickly change the call request will be offered to him/her.

As several alternative embodiments, the floor information appearing on the operation panel 100 may be displayed by one or more of a number, a text, a progress bar, a percentage, or a color.

More specifically, when the operation panel 100 contains two types of floor information at the same time, the first floor information 111 may be configured to be displayed by a number or a text having a first brightness, and the second floor information 112 is configured to be displayed by a number or a text having a second brightness, thereby facilitating distinction by the passenger. Alternatively, the first brightness may be configured to be greater than the second brightness, thereby enabling the first floor information 111 most likely to be required by the passenger to be more prominently displayed within the passenger's field of view.

As another alternative embodiment, when the operation panel 100 contains two types of floor information at the same time, the first floor information 111 may be configured to be displayed by a number or a text having a first color, and the second floor information 112 is configured to be displayed by a number or a text having a second color, thereby facilitating distinction by the passenger.

As a further alternative embodiment, to further highlight the key point, the second floor information 112 may be displayed by an ellipsis. When the passenger confirms that the required information is not in the first floor information 111, he/she may enter a corresponding input instruction on the touch control area 120, for example, by tapping a designated position, etc., to activate the ellipsis. When the touch control area 120 receives the corresponding input instruction, the control unit controls the ellipsis to unfold to display the second floor information 112. In this way, the first floor information 111 most likely to be required by the passenger can be prominently displayed in the field of view of the passenger, and the function of conveniently calling the second floor information 112 less likely to be required is also provided, thereby improving passenger experience.

In addition, as one of the hardware foundations in the foregoing embodiments, the elevator operation panel 100 may include a liquid crystal display. In this case, the display area 110 and the touch control area 120 may be integrated in the liquid crystal display, wherein the two may share the same area or may be partitioned from each other, which will be determined based on the actual situation. And there are relatively mature technical bases to implement these two solutions, so it will not be described in detail.

Although not shown in the drawings, an embodiment of an elevator system is also provided herein. The elevator system comprises: an elevator car configured to carry passengers; and an elevator operation panel 100 having a display area 110 and a touch control area 120. Wherein, the display area 110 is configured to display first floor information 111 of the building based at least on an elevator movement trend. The first floor information includes all floors that the elevator has not yet arrived at on the elevator movement trend. And the touch control area 120 is configured to receive an input instruction. In addition, the elevator system further includes a control unit configured to receive the input instruction from the touch control area 120, and adjust display information of the display area 110 according to the input instruction. And the control unit is further configured to receive floor change information of the building, and adjust the display information of the display area 110 according to the floor change information of the building. Under such a configuration, according to the elevator system of the present application, by displaying the corresponding floor information based on the elevator movement trend, on the one hand, the amount of information displayed on the panel can be reduced, and part of the information screening and filtering time of the passenger can be saved, so that the passenger can quickly select the desired floor, and on the other hand, information most likely to be required by the passenger can be displayed with the maximum probability on the panel in the first place, so as to prevent the passenger from performing other operations to obtain the required information, thereby effectively improving passenger experience.

The elevator operation panel 100 applied in the embodiments of the elevator system is similar to the elevator operation panel 100 separately mentioned in the foregoing embodiments. In addition, a certain modification is made to the control unit. As mentioned aforesaid, the control unit may be directly disposed in or attached to the elevator operation panel 100, and it may also belong to the overall control unit of the corresponding elevator system. Accordingly, that the elevator operation panel 100 includes a control unit as described herein is intended to express the integrity in function, but not to emphasize that the operation panel 100 must include the corresponding hardware for the control unit.

On the basis of the above, further improvements may be made to the components or functional parts therein or additional components and functional parts may be added based on the foregoing embodiments, as will be exemplarily explained below.

For example, the display area 110 may also be configured to display second floor information 112 that is not on the elevator movement trend, wherein the second floor information 112 has a different display effect from the first floor information 111. At this time, by providing different display effects, it is still possible to highlight the first floor information 111 most likely to be required by the passenger. At the same time, when the passenger has a call error or temporarily changes the request, an option to quickly change the call request will be offered to him/her.

As several alternative embodiments, the floor information appearing on the operation panel 100 may be displayed by one or more of a number, a text, a progress bar, a percentage, or a color.

More specifically, when the operation panel 100 in the elevator system contains two types of floor information at the same time, the first floor information 111 may be configured to be displayed by a number or a text having a first brightness, and the second floor information 112 is configured to be displayed by a number or a text having a second brightness, thereby facilitating distinction by the passenger. Alternatively, the first brightness may be configured to be greater than the second brightness, thereby enabling the first floor information 111 most likely to be required by the passenger to be more prominently displayed within the passenger's field of view.

As another alternative embodiment, when the operation panel 100 contains two types of floor information at the same time, the first floor information 111 may be configured to be displayed by a number or a text having a first color, and the second floor information 112 is configured to be displayed by a number or a text having a second color, thereby facilitating distinction by the passenger.

As a further alternative embodiment, to further highlight the key point, the second floor information 112 may be displayed by an ellipsis. When the passenger confirms that the required information is not in the first floor information 111, he/she may enter a corresponding input instruction on the touch control area 120, for example, by tapping a designated position, etc., to activate the ellipsis. When the touch control area 120 receives the corresponding input instruction, the control unit controls the ellipsis to unfold to display the second floor information 112. In this way, the first floor information 111 most likely to be required by the passenger can be prominently displayed in the field of view of the passenger, and the function of conveniently calling the second floor information 112 less likely to be required is also provided, thereby improving passenger experience.

In addition, as one of the hardware foundations in the foregoing embodiments, the elevator operation panel 100 may include a liquid crystal display. In this case, the display area 110 and the touch control area 120 may be integrated in the liquid crystal display, wherein the two may share the same area or may be partitioned from each other, which will be determined based on the actual situation. And there are relatively mature technical bases to implement these two solutions, so it will not be described in detail.

Likewise, although not shown in the drawings, an elevator panel display method is also provided herein. The display method comprises: displaying, by a display area 110 of the elevator panel, first floor information 111 of the building based at least on an elevator movement trend, wherein the first floor information 111 includes all floors that the elevator has not yet arrived at on the elevator movement trend. In addition, a touch control area 120 of the elevator panel is used to receive an input instruction. Further, a control unit of the elevator or the elevator panel is configured to receive the input instruction from the touch control area 120, and adjust display information of the display area 110 according to the input instruction. And the control unit is further configured to receive floor change information of the building, and adjust the display information of the display area 110 according to the floor change information of the building. Under such a configuration, on the one hand, the control unit can be used to receive an input instruction from the touch control area 120 and perform a corresponding operation, for example, to a corresponding floor or the like. On the other hand, the control unit can also be used to obtain the real-time floor change information of the elevator in the building and control the display area 110 to dynamically display the corresponding first floor information 111. For example, referring to FIGS. 1 and 2, for a building having a total of seven floors, when a passenger enters the elevator car from the lobby, the first floor information 111 displayed on the elevator operation panel 100 in the elevator car is the touch buttons of 1^{st}-7^{th} floors, which allows the passenger to choose any one therefrom to go to the corresponding floor. As the elevator ascends, the first floor information 111 displayed on the elevator operation panel 100 is gradually changed to the touch buttons of 2^{nd}-7^{th} floors, 3^{rd}-7^{th} floors, and the like. Another example is that when a second passenger calls from 4^{th} floor of the building, when he/she enters the elevator car, considering that the call request is shown as going up, the chance of going to the 1^{st}-4^{th} floors is extremely low (not absolutely impossible, for example, the passenger presses the wrong call direction, etc.), so the first floor information 111 displayed on the elevator operation panel 100 in the elevator car has been changed to the touch buttons of 5^{th}-7^{th} floors, so that the passenger can quickly acquire the desired floor. This kind of improvement is especially outstanding when the number of floors in a building is large, because as the number of floors increases, the display space for the identifier of each floor will become smaller, which will bring troubles in selection to passengers. In summary, according to the elevator panel display method of the present application, by displaying the corresponding floor information based on the elevator movement trend, on the one hand, the amount of information displayed on the panel can be reduced, and part of the information screening and filtering time of the passenger can be saved, so that the passenger can quickly select the desired floor, and on the other hand, information most likely to be required by the passenger can be displayed with the maximum probability on the panel in the first place, so as to prevent the passenger from performing other operations to obtain the required information, thereby effectively improving passenger experience.

On the basis of the above, the display area 110 may also be configured to display second floor information 112 that is not on the elevator movement trend, wherein the second floor information 112 has a different display effect from the first floor information 111. At this time, by providing different display effects, it is still possible to highlight the first floor information 111 most likely to be required by the passenger. At the same time, when the passenger has a call error or temporarily changes the request, an option to quickly change the call request will be offered to him/her.

More specifically, when the operation panel 100 contains two types of floor information at the same time, to further highlight the key point, the second floor information 112 may be displayed by an ellipsis. When the passenger confirms that the required information is not in the first floor information 111, he/she may enter a corresponding input instruction on the touch control area 120, for example, by tapping a designated position, etc., to activate the ellipsis. When the touch control area 120 receives the corresponding input instruction, the control unit controls the ellipsis to unfold to display the second floor information 112. In this way, the first floor information 111 most likely to be required by the passenger can be prominently displayed in the field of view of the passenger, and the function of conveniently calling the second floor information 112 less likely to be required is also provided, thereby improving passenger experience.

The present specification discloses the present application using embodiments, including optimal embodiment, and also enables those skilled in the art to carry out the present application, including manufacturing and using any apparatus or system, and performing any method contained therein. The protection scope of the patent of the present application is limited by the claims, and may include other embodiments conceivable to those skilled in the art. If these kinds of other embodiments have structural components having no difference from what is literally described in the claims, or if they include equivalent structural components having no substantial difference from what is literally described in the claims, then they are intended to be in the scope of the claims.

## Claims

1. An elevator operation panel (100), comprising:
a display area (110) configured to display first floor information (111) of the building based at least on an elevator movement trend, whereby the elevator movement trend is the movement direction of an elevator car in the elevator system after receiving one or more call instructions, wherein the first floor information (111) includes all floors that the elevator has not yet arrived at on the elevator movement trend; wherein the display area (110) is further configured to display second floor information (112) that is not on the elevator movement trend, wherein the second floor information (112) has a different display effect from the first floor information (111) and wherein the second floor information (112) is displayed by an ellipsis;
a touch control area (120) configured to receive an input instruction; and
a control unit configured to receive an input instruction from the touch control area (120), and adjust display information of the display area (110) according to the input instruction, wherein when the touch control area (120) receives a corresponding input instruction, the control unit controls the ellipsis to unfold to display the second floor information (112); and wherein the control unit is further configured to receive floor change information of the building, and adjust the display information of the display area (110) according to the floor change information of the building.

2. The elevator operation panel (100) according to claim 1, wherein the first floor information (111) is displayed by one or more of a number, a text, a progress bar, a percentage, or a color.

3. The elevator operation panel (100) according to claim 1 or 2, wherein the second floor information (112) is displayed by one or more of a number, a text, a progress bar, a percentage, or a color.

4. The elevator operation panel (100) according to claim 3, wherein the first floor information (111) is displayed by a number or a text having a first brightness, and the second floor information (112) is displayed by a number or a text having a second brightness.

5. The elevator operation panel (100) according to claim 4, wherein the first brightness is greater than the second brightness.

6. The elevator operation panel (100) according to any of claims 3, 4 or 5, wherein the first floor information (111) is displayed by a number or a text having a first color, and the second floor information (112) is displayed by a number or a text having a second color.

7. The elevator operation panel (100) according to any preceding claim, wherein the elevator operation panel (100) comprises a liquid crystal display, and wherein the display area (110) and the touch control area (120) are integrated in the liquid crystal display.

8. An elevator system, comprising:
an elevator car configured to carry passengers; and
an elevator operation panel (100) according to claim 1.

9. The elevator system according to claim 8, wherein the first floor information (111) and/or the second floor information (112) is displayed by one or more of a number, a text, a progress bar, a percentage, or a color; further optionally wherein the first floor information (111) is displayed by a number or a text having a first brightness, and the second floor information (112) is displayed by a number or a text having a second brightness, and further optionally wherein the first brightness is greater than the second brightness; and/or optionally wherein the first floor information (111) is displayed by a number or a text having a first color, and the second floor information (112) is displayed by a number or a text having a second color; and/or optionally wherein the elevator operation panel (100) comprises a liquid crystal display, and wherein the display area (110) and the touch control area (120) are integrated in the liquid crystal display.

10. The elevator system according to any of claim 8 or 9, wherein the control unit is provided in the elevator operation panel (100).

11. An elevator panel display method, comprising:
displaying, by a display area (110) of the elevator panel (100), first floor information (111) of the building based at least on an elevator movement trend, whereby the elevator movement trend is the movement direction of an elevator car in the elevator system after receiving one or more call instructions, wherein the first floor information (111) includes all floors that the elevator has not yet arrived at on the elevator movement trend, wherein the display area (110) is further configured to display second floor information (112) that is not on the elevator movement trend, wherein the second floor information (112) has a different display effect from the first floor information (111) and wherein the second floor information (112) is displayed by an ellipsis;
receiving, by a touch control area (120) of the elevator panel (100), an input instruction; and
receiving, by a control unit of the elevator or the elevator panel (100), an input instruction from the touch control area (120), and adjusting the display information of the display area (110) according to the input instruction, wherein when the touch control area (120) receives a corresponding input instruction, the control unit controls the ellipsis to unfold to display the second floor information (112); and wherein the control unit is further configured to receive floor change information of the building, and adjust the display information of the display area (110) according to the floor change information of the building.

## Patentansprüche

1. Aufzugsbedientafel (100), umfassend:
einen Anzeigebereich (110), der dazu konfiguriert ist, Informationen zum ersten Stockwerk (111) des Gebäudes mindestens basierend auf einem Aufzugsbewegungstrend anzuzeigen, wobei der Aufzugsbewegungstrend die Bewegungsrichtung einer Aufzugskabine im Aufzugssystem nach Empfangen eines oder mehrerer Rufanweisungen ist, wobei die Informationen zum ersten Stockwerk (111) alle Stockwerke beinhalten, die der Aufzug gemäß dem Aufzugsbewegungstrend noch nicht erreicht hat; wobei der Anzeigebereich (110) ferner dazu konfiguriert ist, Informationen zum zweiten Stockwerk (112) anzuzeigen, die nicht im Aufzugsbewegungstrend liegen, wobei die Informationen zum zweiten Stockwerk (112) einen anderen Anzeigeeffekt als die Informationen zum ersten Stockwerk (111) aufweisen und wobei die Informationen zum zweiten Stockwerk (112) durch Auslassungspunkte angezeigt werden;
einen Berührungssteuerungsbereich (120), der dazu konfiguriert ist, eine Eingabeanweisung zu empfangen; und
eine Steuereinheit, die dazu konfiguriert ist, eine Eingabeanweisung von dem Berührungssteuerungsbereich (120) zu empfangen und Anzeigeinformationen des Anzeigebereichs (110) gemäß der Eingabeanweisung anzupassen, wobei, wenn der Berührungssteuerungsbereich (120) eine entsprechende Eingabeanweisung empfängt, die Steuereinheit die Auslassungspunkte so steuert, dass sie sich entfalten, um die Informationen zum zweiten Stockwerk (112) anzuzeigen; und wobei die Steuereinheit ferner dazu konfiguriert ist, Stockwerkswechselinformationen des Gebäudes zu empfangen und die Anzeigeinformationen des Anzeigebereichs (110) gemäß den Stockwerkswechselinformationen des Gebäudes anzupassen.

2. Aufzugsbedientafel (100) nach Anspruch 1, wobei die Informationen zum ersten Stockwerk (111) durch eines oder mehrere einer Zahl, eines Textes, eines Fortschrittsbalkens, eines Prozentsatzes oder einer Farbe angezeigt werden.

3. Aufzugsbedientafel (100) nach Anspruch 1 oder 2, wobei die Informationen zum zweiten Stockwerk (112) durch eines oder mehrere einer Zahl, eines Textes, eines Fortschrittsbalkens, eines Prozentsatzes oder einer Farbe angezeigt werden.

4. Aufzugsbedientafel (100) nach Anspruch 3, wobei die Informationen zum ersten Stockwerk (111) durch eine Zahl oder einen Text, die eine erste Helligkeit aufweisen, angezeigt werden und die Informationen zum zweiten Stockwerk (112) durch eine Zahl oder einen Text, die eine zweite Helligkeit aufweisen, angezeigt werden.

5. Aufzugsbedientafel (100) nach Anspruch 4, wobei die erste Helligkeit größer als die zweite Helligkeit ist.

6. Aufzugsbedientafel (100) nach einem der Ansprüche 3, 4 oder 5, wobei die Informationen zum ersten Stockwerk (111) durch eine Zahl oder einen Text, die eine erste Farbe aufweisen, angezeigt werden und die Informationen zum zweiten Stockwerk (112) durch eine Zahl oder einen Text, die eine zweite Farbe aufweisen, angezeigt werden.

7. Aufzugsbedientafel (100) nach einem der vorhergehenden Ansprüche, wobei die Aufzugsbedientafel (100) eine Flüssigkristallanzeige umfasst und wobei der Anzeigebereich (110) und der Berührungssteuerungsbereich (120) in die Flüssigkristallanzeige integriert sind.

8. Aufzugssystem, umfassend:
eine Aufzugskabine, die zum Transportieren von Passagieren konfiguriert ist; und
eine Aufzugsbedientafel (100) nach Anspruch 1.

9. Aufzugssystem nach Anspruch 8, wobei die Informationen zum ersten Stockwerk (111) und/oder die Informationen zum zweiten Stockwerk (112) durch eines oder mehrere einer Zahl, eines Textes, eines Fortschrittsbalkens, eines Prozentsatzes oder einer Farbe angezeigt werden; wobei ferner optional die Informationen zum ersten Stockwerk (111) durch eine Zahl oder einen Text, die eine erste Helligkeit aufweisen, angezeigt werden und die Informationen zum zweiten Stockwerk (112) durch eine Zahl oder einen Text, die eine zweite Helligkeit aufweisen, angezeigt werden und wobei ferner optional die erste Helligkeit größer als die zweite Helligkeit ist; und/oder wobei optional die Informationen zum ersten Stockwerk (111) durch eine Zahl oder einen Text, die eine erste Farbe aufweisen, angezeigt werden und die Informationen zum zweiten Stockwerk (112) durch eine Zahl oder einen Text, die eine zweite Farbe aufweisen, angezeigt werden; und/oder wobei optional die Aufzugsbedientafel (100) eine Flüssigkristallanzeige umfasst, und wobei der Anzeigebereich (110) und der Berührungssteuerungsbereich (120) in die Flüssigkristallanzeige integriert sind.

10. Aufzugssystem nach einem der Ansprüche 8 oder 9, wobei die Steuereinheit in der Aufzugsbedientafel (100) bereitgestellt ist.

11. Aufzugstafelanzeigeverfahren, umfassend:
Anzeigen, durch einen Anzeigebereich (110) der Aufzugstafel (100), von Informationen zum ersten Stockwerk (111) des Gebäudes mindestens basierend auf einem Aufzugsbewegungstrend, wobei der Aufzugsbewegungstrend die Bewegungsrichtung einer Aufzugskabine im Aufzugssystem nach Empfangen einer oder mehrerer Rufanweisungen ist, wobei die Informationen zum ersten Stockwerk (111) alle Stockwerke beinhalten, die der Aufzug gemäß dem Aufzugsbewegungstrend noch nicht erreicht hat, wobei der Anzeigebereich (110) ferner dazu konfiguriert ist, Informationen zum zweiten Stockwerk (112) anzuzeigen, die nicht im Aufzugsbewegungstrend liegen, wobei die Informationen zum zweiten Stockwerk (112) einen anderen Anzeigeeffekt als die Informationen zum ersten Stockwerk (111) aufweisen und wobei die Informationen zum zweiten Stockwerk (112) durch Auslassungspunkte angezeigt werden;
Empfangen einer Eingabeanweisung durch einen Berührungssteuerungsbereich (120) der Aufzugstafel (100); und
Empfangen, durch eine Steuereinheit des Aufzugs oder der Aufzugstafel (100), einer Eingabeanweisung von dem Berührungssteuerungsbereich (120) und Anpassen der Anzeigeinformationen des Anzeigebereichs (110) gemäß der Eingabeanweisung, wobei, wenn der Berührungssteuerungsbereich (120) eine entsprechende Eingabeanweisung empfängt, die Steuereinheit die Auslassungspunkte so steuert, dass sie sich entfalten, um die Informationen zum zweiten Stockwerk (112) anzuzeigen; und wobei die Steuereinheit ferner dazu konfiguriert ist, Stockwerkswechselinformationen des Gebäudes zu empfangen und die Anzeigeinformationen des Anzeigebereichs (110) gemäß den Stockwerkswechselinformationen des Gebäudes anzupassen.

## Revendications

1. Panneau de commande d'ascenseur (100), comprenant :
une zone d'affichage (110) configurée pour afficher des informations sur le premier étage (111) du bâtiment sur la base au moins d'une tendance de mouvement d'ascenseur, la tendance de mouvement d'ascenseur étant le sens de mouvement d'une cabine d'ascenseur dans le système d'ascenseur après avoir reçu un ou plusieurs appels d'instructions, dans lequel les informations sur le premier étage (111) comportent tous les étages auxquels l'ascenseur n'est pas encore arrivé lors de la tendance de mouvement d'ascenseur ; dans lequel la zone d'affichage (110) est en outre configurée pour afficher des informations sur le second étage (112) qui ne correspondent pas à la tendance de mouvement d'ascenseur, dans lequel les informations sur le second étage (112) présentent un effet d'affichage différent des informations sur le premier étage (111) et dans lequel les informations sur le second étage (112) sont affichées par des points de suspension ;
une zone de commande tactile (120) configurée pour recevoir une instruction d'entrée ; et
une unité de commande configurée pour recevoir une instruction d'entrée provenant de la zone de commande tactile (120), et ajuster les informations d'affichage de la zone d'affichage (110) selon l'instruction d'entrée, dans lequel lorsque la zone de commande tactile (120) reçoit une instruction d'entrée correspondante, l'unité de commande commande aux points de suspension de se déplier pour afficher les informations sur le second étage (112) ; et dans lequel l'unité de commande est en outre configurée pour recevoir des informations de changement d'étage du bâtiment, et ajuster les informations d'affichage de la zone d'affichage (110) selon les informations de changement d'étage du bâtiment.

2. Panneau de commande d'ascenseur (100) selon la revendication 1, dans lequel les informations sur le premier étage (111) sont affichées par un ou plusieurs parmi un nombre, un texte, une barre de progression, un pourcentage ou une couleur.

3. Panneau de commande d'ascenseur (100) selon la revendication 1 ou 2, dans lequel les informations sur le second étage (112) sont affichées par un ou plusieurs parmi un nombre, un texte, une barre de progression, un pourcentage ou une couleur.

4. Panneau de commande d'ascenseur (100) selon la revendication 3, dans lequel les informations sur le premier étage (111) sont affichées par un nombre ou un texte présentant une première luminosité, et les informations sur le second étage (112) sont affichées par un nombre ou un texte présentant une seconde luminosité.

5. Panneau de commande d'ascenseur (100) selon la revendication 4, dans lequel la première luminosité est supérieure à la seconde luminosité.

6. Panneau de commande d'ascenseur (100) selon l'une quelconque des revendications 3, 4 ou 5, dans lequel les informations sur le premier étage (111) sont affichées par un nombre ou un texte présentant une première couleur, et les informations sur le second étage (112) sont affichées par un nombre ou un texte présentant une seconde couleur.

7. Panneau de commande d'ascenseur (100) selon une quelconque revendication précédente, dans lequel le panneau de commande d'ascenseur (100) comprend un affichage à cristaux liquides, et dans lequel la zone d'affichage (110) et la zone de commande tactile (120) sont intégrées dans l'affichage à cristaux liquides.

8. Système d'ascenseur, comprenant :
une cabine d'ascenseur configurée pour transporter des passagers ; et
un panneau de commande d'ascenseur (100) selon la revendication 1.

9. Système d'ascenseur selon la revendication 8, dans lequel les informations sur le premier étage (111) et/ou les informations sur le second étage (112) sont affichées par un ou plusieurs parmi un nombre, un texte, une barre de progression, un pourcentage ou un couleur ; en outre éventuellement dans lequel les informations sur le premier étage (111) sont affichées par un nombre ou un texte présentant une première luminosité, et les informations sur le second étage (112) sont affichées par un nombre ou un texte présentant une seconde luminosité, et en outre éventuellement dans lequel la première luminosité est supérieure à la seconde luminosité ; et/ou éventuellement dans lequel les informations sur le premier étage (111) sont affichées par un nombre ou un texte présentant une première couleur, et les informations sur le second étage (112) sont affichées par un nombre ou un texte présentant une seconde couleur ; et/ou éventuellement dans lequel le panneau de commande d'ascenseur (100) comprend un affichage à cristaux liquides, et dans lequel la zone d'affichage (110) et la zone de commande tactile (120) sont intégrées dans l'affichage à cristaux liquides.

10. Système d'ascenseur selon l'une quelconque des revendications 8 ou 9, dans lequel l'unité de commande est fournie dans le panneau de commande d'ascenseur (100).

11. Procédé d'affichage de panneau d'ascenseur, comprenant :
l'affichage, par une zone d'affichage (110) du panneau d'ascenseur (100), d'informations sur le premier étage (111) du bâtiment sur la base au moins d'une tendance de mouvement d'ascenseur, la tendance de mouvement d'ascenseur étant le sens de mouvement d'une cabine d'ascenseur dans le système d'ascenseur après avoir reçu un ou plusieurs appels d'instructions, dans lequel les informations sur le premier étage (111) comportent tous les étages auxquels l'ascenseur n'est pas encore arrivé lors de la tendance de mouvement d'ascenseur ; dans lequel la zone d'affichage (110) est en outre configurée pour afficher des informations sur le second étage (112) qui ne correspondent pas à la tendance de mouvement d'ascenseur, dans lequel les informations sur le second étage (112) présentent un effet d'affichage différent des informations sur le premier étage (111) et dans lequel les informations sur le second étage (112) sont affichées par des points de suspension ;
la réception, par une zone de commande tactile (120) du panneau d'ascenseur (100), d'une instruction d'entrée ; et
la réception, par une unité de commande d'ascenseur du panneau d'ascenseur (100), d'une instruction d'entrée provenant de la zone de commande tactile (120), et l'ajustement des informations d'affichage de la zone d'affichage (110) selon l'instruction d'entrée, dans lequel lorsque la zone de commande tactile (120) reçoit une instruction d'entrée correspondante, l'unité de commande commande aux points de suspension de se déplier pour afficher les informations sur le second étage (112) ; et dans lequel l'unité de commande est en outre configurée pour recevoir des informations de changement d'étage du bâtiment, et ajuster les informations d'affichage de la zone d'affichage (110) selon les informations de changement d'étage du bâtiment.
